# EUROPÄISCHE PATENTSCHRIFT

(11) **EP 2 081 791 B1**
(45) Veröffentlichungstag und Bekanntmachung des Hinweises auf die Patenterteilung: **03.03.2010**
(21) Anmeldenummer: 07820035.9
(22) Anmeldetag: 04.09.2007
(51) Int. Cl.: B60K 31/00

(54) **VERFAHREN ZUM ABTASTEN EINES UMFELDS EINES FAHRZEUGS**
METHOD FOR SCANNING THE SURROUNDINGS OF A VEHICLE
PROCÉDÉ POUR ANALYSER L'ENVIRONNEMENT D'UN VÉHICULE

(30) Priorität: 09.10.2006 DE 102006047637
(43) Veröffentlichungstag der Anmeldung: 29.07.2009
(73) Patentinhaber: Robert Bosch GmbH, 70442 Stuttgart (DE)
(72) Erfinder: DORENKAMP, Stephan, 71640 Ludwigsburg (DE); BRICHZIN, Volker, 71634 Ludwigsburg (DE); GARCIA BORDES, Maria-Eugenia, 71229 Leonberg (DE); SCHIRM, Ulrich, 72760 Reutlingen (DE)
(86) Internationale Anmeldenummer: PCT/EP2007/059229
(87) Internationale Veröffentlichungsnummer: WO 2008/043609

(56) Entgegenhaltungen:
- EP-A- 1 485 268
- WO-A-03/078195
- DE-A1- 19 948 252

## Beschreibung

Die Erfindung betrifft ein Verfahren zum Abtasten eines Umfelds eines Fahrzeugs, insbesondere eines Kraftfahrzeugs, eine Einheit zur Durchführung des Verfahrens sowie ein Computerprogramm.

### Stand der Technik

Bei Systemen und Verfahren zur adaptiven Geschwindigkeitsregelung (ACC: adaptive cruise control) werden Abstandsbestimmungs- und Abstandsrelegungsmethoden eingesetzt, um Abstände zwischen einzelnen Fahrzeugen kontrollieren zu können, so dass kritische Verkehrssituationen vermieden werden. Zur Abstandsbestimmung werden bspw. Radar- (radar: radio detecting and rangig) oder Lidarsysteme (lidar: light detection and ranging) eingesetzt.

WO 03 078 195 A wird als nächstliegender Stand der Technik angesehen. Es offenbart ein Verfahren zum Abtasten eines Umfelds eines Fahrzeugs mit einer Abtasteinrichtung, die automatisch die Blindheit des Abstandssensors erkennt.

Bekannte ACC-Verfahren stellen somit u. a. sicher, dass bei einem Fahrzeug zu jedem Zeitpunkt der richtige Abstand zu einem voraus befindlichen Fahrzeug eingehalten ist. Ein Problem kann sich jedoch ergeben, wenn die freie Sicht der Abtasteinrichtung, bspw. infolge eingeschränkter Lichtverhältnisse oder aufgrund widriger Witterungsbedingungen, nicht mehr gegeben ist. In diesem Fall muss die Abtasteinrichtung bzw. das ACC-System deaktiviert werden. Um festzustellen, ob die Abtasteinrichtung freie Sicht hat, also ob das System "sieht" oder "blind" ist, sind sogenannte Blindalgorithmen bekannt, die zu regelmäßigen Zeitpunkten oder ausgelöst durch bestimmte Ereignisse zur Ausführung kommen. Auf diese Weise ist sichergestellt, dass die automatische Geschwindigkeitsregelung nur bei Vorliegen verlässlicher Daten zu weiteren Verkehrsteinehmem durchgeführt wird.

ACC-Systeme der neueren Generation, die als ACCplus-Systeme bekannt sind, erweitern den Bereich des Einsatzes dieser Systeme bei Fahrtgeschwindigkeiten bis zu einem Stillstand des Fahrzeugs. Somit ist es notwendig, ACC-Systeme und Abtasteinrichtungen bzw. Abtastverfahren zu entwickeln, die Blindalgorithmen verwenden, die ggf. zusammen mit weiteren Algorithmen eine zuverlässige Blindheitserkennung bzw. -erfassung bei geringen Geschwindigkeiten gewährleisten.

### Offenbarung der Erfindung

Das erfindungsgemäße Verfahren dient zum Abtasten eines Umfelds eines Fahrzeugs und ist insbesondere für einen Einsatz in einem Kraftfahrzeug vorgesehen. Hierzu verwendet das Verfahren eine Abtasteinrichtung, wobei bei Unterschreiten einer ersten Grenzgeschwindigkeit durch das Fahrzeug ein Zeitgeber getriggert wird, dessen Stand solange implementiert wird, bis das Fahrzeug eine zweite Grenzgeschwindigkeit überschreitet, wobei bei Ablauf eines durch den Stand des Zeitgebers erfassten Zeitraums, in dem der Stand des Zählers inkrementiert wird, eine Überprüfung der freien Sicht der Abtasteinrichtung durchgeführt wird.

Der mit dem beschriebenen Verfahren verwirklichte Blindalgorithmus überprüft somit die freie Sicht eines Fahrzeugs, während dieses sich in einem vorbestimmbaren Geschwindigkeitsbereich, üblicherweise in einem Bereich niedriger Geschwindigkeit, befindet. Somit ist dieser Algorithmus besonders bei niedrigen Geschwindigkeiten einsetzbar und stellt in Kombination mit dem existierenden Blindalgorithmus eine zuverlässigere Blinderfassung in dem gesamten ACC-Geschwindigkeitsbereich bereit.

Falls die Überprüfung der freien Sicht der Abtasteimichtung ergibt, dass keine freie Sicht gegeben ist, sollte die Abtasteinrichtung deaktiviert werden. Ergibt sich, dass freie Sicht gegeben ist, wird die Abtasteinrichtung nicht deaktiviert. In diesem Fall wird der Zeitgeber üblicherweise zurückgesetzt.

Nach Überschreiten der zweiten Grenzgeschwindigkeit durch das Fahrzeug, bevor der Zeitraum abgelaufen ist, wird der Zeitgeber zurückgesetzt. Das bedeutet, dass, sobald sich das Fahrzeug außerhalb des interessierenden Geschwindigkeitsbereichs befindet, durch diesen Blindalgorithmus keine Überprüfung der freien Sicht ausgelöst wird.

In Ausgestaltung des Verfahrens ist bzw. sind die erste Grenzgeschwindigkeit, die zweite Grenzgeschwindigkeit und/oder der Zeitraum einstellbar bzw. parametrisierbar. Als geeignete Größe für die erste Geschwindigkeit hat sich 15 km/h, für die zweite Geschwindigkeit 0,5 km/h und für den Zeitraum des Zeitgebers 300 Sekunden herausgestellt. Es sind hierbei selbstverständlich andere Werte einstellbar.

Das beschriebene Verfahren wird bspw. bei einer Abstandsmessung und insbesondere im Rahmen einer adaptiven Geschwindigkeitsregelung eingesetzt. So ist gewährleistet, dass bei dem ACC-System im gesamtem Geschwindigkeitsbereich des Fahrzeugs, auch bis zu dem Stillstand des Fahrzeugs, zu vorgebbaren Zeitpunkten Überprüfungen der freien Sicht durchgeführt werden.

Die vorgestellte Einheit, insbesondere eine elektronische Einheit, dient zum Abtasten eines Umfelds eines Kraftfahrzeugs und insbesondere zur Durchführung eines vorstehend beschriebenen Verfahrens. Die Einheit weist eine Abtasteinrichtung und einen Zeitgeber auf, dessen Stand bei Unterschreiten einer ersten Grenzgeschwindigkeit durch das Fahrzeug solange inkrementiert wird, bis das Fahrzeug eine zweite Grenzgeschwindigkeit überschreitet, wobei bei Ablauf eines durch den Stand des Zeitgebers erfassten Zeitraums, in dem der Stand des Zeitgebers inkrementiert wird, die Abtasteinrichtung eine Überprüfung der freien Sicht durchführt.

Die vorgestellte Einrichtung umfasst typischerweise eine Recheneinheit zur Durchführung des zuvor beschriebenen Verfahrens. Der Zeitgeber ist dieser Recheneinheit zugeordnet, d.h. die Recheneinheit kann den Stand des Zeitgebers auslesen.

Das erfindungsgemäße Computerprogramm umfasst Programmcodemittel um alle Schritte eines Verfahrens nach einem der Ansprüche 1 bis 9 durchzuführen, wenn das Computerprogramm auf einem Computer oder einer entsprechenden Recheneinheit, insbesondere in einer Einheit der vorstehend beschriebenen Art, ausgeführt wird.

Eine mögliche Ausführungsform des erfindungsgemäßen Verfahrens sieht somit vor, dass bei einem Fahrzeug mit ACC-System der vorgestellte Blinderfassungsalgorithmus bei Geschwindigkeiten von weniger als 15 km/h zum Einsatz kommt. Hierbei wird ein Zeitgeber gestartet, sobald die Geschwindigkeit des Fahrzeugs unter eine parametrisierbare Geschwindigkeit, bspw. von 0,5 km/h, fällt. Solange die Geschwindigkeit des Fahrzeugs eine weitere parametrisierbare Geschwindigkeit, in diesem Fall 15 km/h, nicht überschreitet, wird der Zähler bzw. dessen Stand inkrementiert. Sobald die Geschwindigkeit des Fahrzeugs diese obere Geschwindigkeitsgrenze überschreitet, wird der Zeitgeber zurückgesetzt und nicht weiter inkrementiert, bis die Geschwindigkeit des Fahrzeugs wieder unter die niedrigere Geschwindigkeitsgrenze, in diesem Fall 0,5 km/h, fällt.

Wenn der Zeitgeber einen parametrisierbaren Zeitraum, bspw. von 300 Sekunden, überschreitet, wird eine Überprüfung der freien Sicht durchgeführt. Ergibt diese Überprüfung, dass freie Sicht nicht gegeben ist, wird die Abtasteinrichtung bzw. das ACC-System deaktiviert. Dann ist es möglich, die Überprüfung zu bestimmten Zeitpunkten, insbesondere zyklisch, zu wiederholen, bis die freie Sicht wieder gegeben ist. Danach kann das ACC-System wieder aktiviert werden. Zweckmäßigerweise wird der Fahrer hiervon informiert.

Sobald die Überprüfung der freien Sicht ergibt, dass diese gegeben ist, wird der Zeitgeber zweckmäßigerweise zurückgesetzt und erst dann wieder getriggert, wenn die Geschwindigkeit des Fahrzeugs wieder unter die untere Geschwindigkeitsgrenze, in diesem Fall 0,5 km/h, fällt.

Die Überprüfung der freien Sicht umfasst ein Messen von erfassten Objekten. Dabei ist es ein Ziel, in der Lage zu sein, ein Objekt zu messen, das sich kontinuierlich während eines bestimmten Zeitraums in minimalem Abstand befindet. Die Überprüfung verläuft erfolgreich, wenn das System in der Lage ist, zumindest ein Objekt zu messen, das diese Anforderungen erfüllt.

Das vorgestellte Verfahren stellt folglich einen neuen Blindalgorithmus bereit, der zusammen mit weiteren Algorithmen einen sicheren Einsatz eines ACC-Systems im gesamten Geschwindigkeitsbereich gewährleistet.

Die erfindungsgemäße Einheit, die in Hardware Software oder als Einheit in Hard- und Software implementiert ist, kann ohne großen Aufwand in ein Fahrzeug an geeigneter Stelle eingebaut werden.

Weitere Vorteile und Ausgestaltungen der Erfindung ergeben sich aus der Beschreibung und der beiliegenden Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt in einem Flussdiagramm eine mögliche Ausführungsform des erfindungsgemäßen Verfahrens.
- Figur 2: zeigt ein Kraftfahrzeug mit einer möglichen Ausführungsform der erfindungsgemäßen Einrichtung.

### Ausführungsfonnen der Erfindung

Die Erfindung ist anhand von Ausführungsformen in den Zeichnungen dargestellt und wird im folgenden unter Bezugnahme auf die Zeichnungen ausführlich beschrieben.

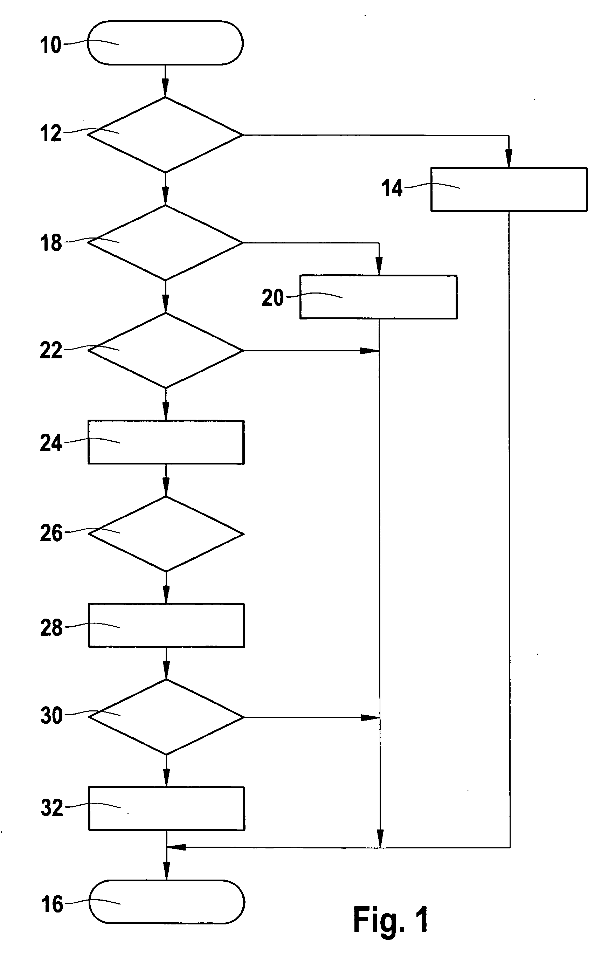

In Figur 1 ist eine mögliche Ausführungsform des erfindungsgemäßen Verfahrens in einem Flussdiagramm dargestellt. In einem ersten Schritt 10 beginnt der Algorithmus zum Überprüfen einer klaren Sicht bei geringer Geschwindigkeit. Zunächst wird in einem Schritt 12 überprüft, ob die Geschwindigkeit des Fahrzeugs geringer als 0,5 m/h ist UND ob der Zeitgeber nicht inkrementiert wird, d.h. ob eine Variable incrementCounter_b gleich "FALSCH" gesetzt ist. Ist dies der Fall, wird in einem Schritt 14 der Zeitgeber auf 0 zurückgesetzt und die Variable incrementCounter_b auf "WAHR" gesetzt. Abschließend erfolgt in einem Schritt 16 ein Rücksprung zu dem Schritt 10.

Ergibt die Überprüfung in Schritt 12 "Nein", wird in einem Schritt 18 überprüft, ob die Geschwindigkeit über 15 km/h liegt. Ist dies der Fall, wird in einem Schritt 20 die Variable incrementCounter_b auf "FALSCH" gesetzt. Über Schritt 16 erfolgt ein Rücksprung zu Schritt 10.

Ergibt die Überprüfung in Schritt 18, dass die Geschwindigkeit von 15 km/h nicht überschritten ist, wird ein einem Schritt 22 überprüft, ob die Variable incrementCounter_b "WAHR" ist. Ist dies nicht der Fall, erfolgt ein Sprung zu Schritt 16. Andernfalls wird in einem Schritt 24 der Zeitgeber inkrementiert. Dies erfolgt solange, bis der Zeitgeber die voreingestellte Schwelle von 300 Sekunden übersteigt. Diese Überprüfung erfolgt in einem Schritt 26. Ist die Zeitschwelle überschritten, erfolgt in einem Schritt 28 die Überprüfung der freien Sicht.

Ergibt die Überprüfung (Schritt 30), dass eine freie Sicht besteht, wird in einem Schritt 32 der Zeitgeber auf 0 zurückgesetzt. Anschließend erfolgt über Schritt 16 der Rücksprung zu Schritt 10. Ergibt die Überprüfung in Schritt 30, dass keine freie Sicht besteht, erfolgt direkt ein Sprung zu Schritt 16.

Die in diesem Ausführungsbeispiel genannten Werte für die Grenzgeschwindigkeit und den Zeitraum sind lediglich beispielhaft genannt und können bedarfsgerecht angepasst werden.

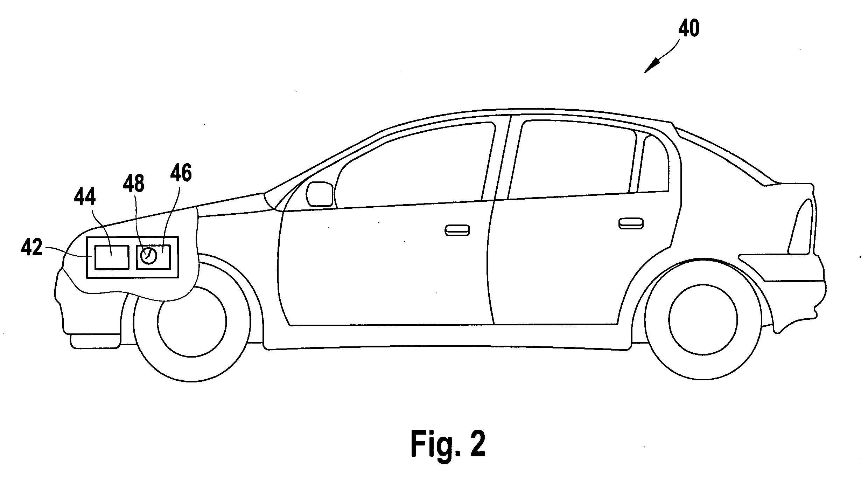

In Figur 2 ist ein Fahrzeug 40 dargestellt, bei dem ein ACC-System zum Einsatz kommt. In dem Fahrzeug 40 ist eine Einheit 42 zum Abtasten eines Umfelds des Fahrzeugs 40 vorgesehen. Diese Einheit dient insbesondere zur Durchführung des in Zusammenhang mit Figur 1 beschriebenen Verfahrens.

Die Einheit 42 weist eine Abtasteinrichtung 44 und eine Recheneinheit 46 auf. In dieser Recheneinheit 46 ist ein Zeitgeber bzw. Timer 48 vorgesehen, der zum Erfassen eines Zeitraums, in dem sich das Fahrzeug 40 in einem gewissen Geschwindigkeitsbereich befindet, ausgelegt ist.

Nach Ablauf des vorgebbaren Zeitraums erfolgt dann die Überprüfung, ob die Abtasteinrichtung 44 über eine freie Sicht verfügt oder nicht. Solange keine freie Sicht besteht, ist das ACC-System deaktiviert, so dass ein sicherer Betrieb des Fahrzeugs 40, auch in dem vorgegebenen Geschwindigkeitsbereich gewährleistet ist. Die Aktivierung des ACC-Systems erfolgt in dieser Ausführung automatisch, sobald die freie Sicht der Abtasteinrichtung 44 bestätigt ist.

## Patentansprüche

1. Verfahren zum Abtasten eines Umfelds eines Fahrzeugs (40) mit einer Abtasteinrichtung (44), bei dem bei Unterschreiten einer ersten Grenzgeschwindigkeit durch das Fahrzeug (40) ein Zeitgeber (48) getriggert wird, dessen Stand solange inkrementiert wird, bis das Fahrzeug (40) eine zweite Grenzgeschwindigkeit überschreitet, wobei bei Ablauf eines durch den Stand des Zeitgebers (48) erfassten Zeitraums, in dem der Stand des Zeitgebers (48) inkrementiert wird, eine Überprüfung der freien Sicht der Abtasteinrichtung (44) durchgeführt wird.

2. Verfahren nach Anspruch 1, bei dem, falls die Überprüfung der freien Sicht der Abtasteinrichtung (44) ergibt, dass keine freie Sicht gegeben ist, die Abtasteinrichtung (44) deaktiviert wird.

3. Verfahren nach Anspruch 1, bei dem, falls die Überprüfung der freien Sicht der Abtasteinrichtung (44) ergibt, dass freie Sicht gegeben ist, der Zeitgeber (48) zurückgesetzt wird.

4. Verfahren nach einem der Ansprüche 1 bis 3, bei dem nach Überschreiten der zweiten Grenzgeschwindigkeit durch das Fahrzeug (40) der Zeitgeber (48) zurückgesetzt wird.

5. Verfahren nach einem der Ansprüche 1 bis 4, bei dem die erste Grenzgeschwindigkeit einstellbar ist.

6. Verfahren nach einem der Ansprüche 1 bis 5, bei dem die zweite Grenzgeschwindigkeit einstellbar ist.

7. Verfahren nach einem der Ansprüche 1 bis 6, bei dem der Zeitraum einstellbar ist.

8. Verfahren nach einem der Ansprüche 1 bis 7, das bei einer Abstandsmessung eingesetzt wird.

9. Verfahren nach Anspruch 8, das im Rahmen einer adaptiven Geschwindigkeitsregelung eingesetzt wird.

10. Einheit zum Abtasten eines Umfelds eines Kraftfahrzeugs (40), zur Durchführung eines Verfahrens nach einem der Ansprüche 1 bis 9, mit einer Abtasteinrichtung (44) und einem Zeitgeber (48), dessen Stand bei Unterschreiten einer ersten Grenzgeschwindigkeit durch das Fahrzeug (40) solange inkrementiert wird, bis das Fahrzeug (40) eine zweite Grenzgeschwindigkeit überschreitet, wobei bei Ablauf eines durch den Stand des Zeitgebers (48) erfassten Zeitraums, in dem der Stand des Zeitgebers (48) inkrementiert wird, die Abtasteinrichtung (44) eine Überprüfung der freien Sicht durchführt.

11. Einheit nach Anspruch 10, die eine Recheneinheit (46), zur Durchführung des Verfahrens nach einem der Ansprüche 1 bis 9, aufweist.

12. Computerprogramm mit Programmcodemitteln, um alle Schritte eines Verfahrens nach einem der Ansprüche 1 bis 9 durchzuführen, wobei das Computerprogramm auf einer Recheneinheit (46), nach Anspruch 11 ausgeführt wird.

## Claims

1. Method for scanning the surroundings of a vehicle (40) with a scanning device (44), in which, when the vehicle (40) drops below a first limiting speed, a timer (48) is triggered whose reading is incremented until the vehicle (40) exceeds a second limiting speed, wherein, when a time period which is determined by the reading of the timer (48) and in which the reading of the timer (48) is incremented, has elapsed, the free visibility of the scanning device (44) is checked.

2. Method according to Claim 1, in which, if the checking of the free visibility of the scanning device (44) reveals that there is no free visibility, the scanning device (44) is deactivated.

3. Method according to Claim 1, in which, if the checking of the free visibility of the scanning device (44) reveals that there is free visibility, the timer (48) is reset.

4. Method according to one of Claims 1 to 3, in which, after the vehicle (40) has exceeded the second limiting speed, the timer (48) is reset.

5. Method according to one of Claims 1 to 4, in which the first limiting speed can be adjusted.

6. Method according to one of Claims 1 to 5, in which the second limiting speed can be adjusted.

7. Method according to one of Claims 1 to 6, in which the time period can be adjusted.

8. Method according to one of Claims 1 to 7 which is used in a distance measurement process.

9. Method according to Claim 8 which is used within the scope of an adaptive cruise control process.

10. Unit for scanning the surroundings of a motor vehicle (40), in order to carry out a method according to one of Claims 1 to 9, having a scanning device (44) and a timer (48), the reading of which is incremented when the vehicle (40) drops below a first limiting speed until the vehicle (40) exceeds a second limiting speed, wherein, when a time period which is determined by the reading of the timer (48) and in which the reading of the timer (48) is incremented has elapsed, the scanning device (44) carries out checking of the free visibility.

11. Unit according to Claim 10 which has a computing unit (46) for carrying out the method according to one of Claims 1 to 9.

12. Computer program having program code means for carrying out all the steps of a method according to one of Claims 1 to 9, wherein the computer program is executed on a computing unit (46) according to Claim 11.

## Revendications

1. Procédé pour analyser l'environnement d'un véhicule (40) qui présente un dispositif d'analyse (44) et dans lequel, lorsqu'une première vitesse limite n'est pas atteinte par le véhicule (40), une horloge (48) est activée et son état est incrémenté jusqu'à ce que le véhicule (40) dépasse une deuxième vitesse limite et lorsqu'une durée, détectée par l'état de l'horloge (48), au cours de laquelle l'état de l'horloge (48) est incrémenté, s'est écoulée, on vérifie si le dispositif d'analyse (44) a une vue libre sur l'environnement.

2. Procédé selon la revendication 1, dans lequel au cas où la vérification indique que le dispositif d'analyse (44) ne dispose pas d'une vue libre sur l'environnement, le dispositif d'analyse (44) est désactivé.

3. Procédé selon la revendication 1, dans lequel au cas où la vérification indique que le dispositif d'analyse (44) dispose d'une vue libre sur l'environnement, l'horloge (48) est reculée.

4. Procédé selon l'une des revendications 1 à 3, dans lequel, lorsque la deuxième vitesse limite est dépassée par le véhicule (40), l'horloge (48) est reculée.

5. Procédé selon l'une des revendications 1 à 4, dans lequel la première vitesse limite est réglable.

6. Procédé selon l'une des revendications 1 à 5, dans lequel la deuxième vitesse limite est réglable.

7. Procédé selon l'une des revendications 1 à 6, dans lequel la durée est réglable.

8. Procédé selon l'une des revendications 1 à 7, utilisé dans une mesure de distance.

9. Procédé selon la revendication 8, utilisé dans le cadre d'une régulation adaptative de la vitesse.

10. Unité d'analyse de l'environnement d'un véhicule automobile (40) en vue de l'exécution d'un procédé selon l'une des revendications 1 à 9, dotée d'un dispositif d'analyse (44) et d'une horloge (48) dont l'état est incrémenté lorsqu'une première vitesse limite n'est pas atteinte par le véhicule (40) jusqu'à ce que le véhicule (40) ait dépassé une deuxième vitesse limite, et lorsqu'une durée, détectée par l'état de l'horloge (48), au cours de laquelle l'état de l'horloge (48) est incrémenté, s'est écoulée, on vérifie si le dispositif d'analyse (44) a une vue libre sur l'environnement.

11. Unité selon la revendication 10, qui présente une unité de calcul (46) destinée à exécuter le procédé selon l'une des revendications 1 à 9.

12. Programme informatique doté de moyens de code de programme en vue d'exécuter toutes les étapes d'un procédé selon l'une des revendications 1 à 9, le programme informatique étant exécuté sur une unité de calcul (46) selon la revendication 11.
